# EUROPÄISCHE PATENTSCHRIFT

(11) **EP 2 547 416 B1**
(45) Veröffentlichungstag und Bekanntmachung des Hinweises auf die Patenterteilung: **22.05.2019**
(21) Anmeldenummer: 11708242.0
(22) Anmeldetag: 11.03.2011
(51) Int. Cl.: B01D 39/04, B29B 9/14

(54) **FILTERGRANULAT**
FILTER GRANULATE
GRANULAT FILTRANT

(30) Priorität: 17.03.2010 DE 102010011787
(43) Veröffentlichungstag der Anmeldung: 23.01.2013
(73) Patentinhaber: Smartpolymer GmbH, 07407 Rudolstadt (DE)
(72) Erfinder: REUßMANN, Thomas, 07407 Rudolstadt (DE); KNOBELSDORF, Carmen, 96515 Neuenbau (DE); ZÖLSMANN, Herbert, 07557 Gera (DE)
(74) Vertreter: Fritz, Edmund Lothar
(86) Internationale Anmeldenummer: PCT/EP2011/053734
(87) Internationale Veröffentlichungsnummer: WO 2011/113769

(56) Entgegenhaltungen:
- EP-A2- 0 226 420
- WO-A1-00/58064
- WO-A1-2007/124522
- WO-A1-2007/124522
- WO-A1-2007/128599
- WO-A1-2007/128599
- WO-A2-2009/082350
- AT-B- 411 661
- DE-A1- 19 711 247
- US-A- 5 206 085
- US-A- 6 090 319
- US-A1- 2009 039 028
- US-B1- 6 398 039
- US-B1- 6 398 039

## Beschreibung

Die vorliegende Erfindung betrifft ein eigenstabiles Filtermaterial in Form eines Fasergranulats erhältlich aus einer Fasermischung aus endlich langen Fasern gemäß dem Oberbegriff des Anspruchs 1.

### [Stand der Technik]

Die DE 10 2006 035 287 A1 beschreibt ein modifiziertes Filtermaterial zur Reinigung von Gasen und Abluftströmen, welches als Trägermaterial ein Cellulosegranulat aus Langfasercellulose und Altpapier verwendet, wobei dieses Trägermaterial mit einem Derivationsreagenz in Form von Eisenoxidhydrat modifiziert wird. Ein Filterverfahren, bei dem ein solches Filtermaterial eingesetzt wird, ist in der DE 10 2006 035 286 A1 beschrieben. Als Trägermaterial für das Filtermaterial kommen auch Gemische aus Naturfasern, z.B. auf Cellulosebasis, anorganischen Fasern, oder Kunstfasern in Betracht.

Die DE 20 2008 003 542 U1 betrifft ein ähnliches chemisch biologisch wirksames autoregeneratives Filtermaterial auf Cellulosefaserbasis für die Abluft- und Gasreinigung. Hier wird ein Filtergranulat eingesetzt, bei dem die Cellulosefaser aus recyceltem Papier gewonnen wird. Ebenso wie im zuvor genannten Stand der Technik erfolgt hier die Einarbeitung des chemischen Zuschlagstoffs in das Filtermaterial bereits bei der Herstellung des Granulats, wobei ein Gemisch aus Cellulose, chemischem Zuschlagstoff und Wasser zu Pellets gepresst und anschließend getrocknet wird.

Aus der WO 00/58064 A1 (EP 1097033 B1) ist ein Langfasergranulat als solches bekannt geworden, bei dem in einer thermoplastischen Matrix Verstärkungsstapelfasern schraubenförmig angeordnet sind, wobei sich die Verstärkungsstapelfasern zusammen mit verschmolzenem Matrixmaterial in einer Mantelzone befinden und die Fasern zusammen mit unverschmolzenen thermoplastischen Stapelfasern in einer Kernzone vorliegen. Ein Verfahren zur Herstellung eines solchen Langfasergranulats ist in dieser Schrift ebenfalls beschrieben. Dieses bekannte Langfasergranulat wurde für eine Verarbeitung in kunststofftechnischen Verfahren entwickelt, bei denen das Granulat aufgeschmolzen wird, beispielsweise in einer Spritzgießmaschine. Auf diese Weise lassen sich leichte steife Verbundbauteile spritzen, die eine gleichmäßige Verstärkungsfaserverteilung aufweisen. Die genannte Druckschrift enthält keinerlei Hinweis auf die Verwendung eines derartigen spezifischen Langfasergranulats als Filtermaterial.

Zunehmende Bedeutung erhält in der Umwelttechnik, speziell in der Luftreinigung, die Abluftreinigung. Aufgrund der wachsenden Ansprüche zur Einhaltung der Normen und Grenzwerte sind für viele Unternehmen Abluftreinigungsanlagen zwingend für die Sicherung der Produktion notwendig. Dabei ist zu beachten, dass die Investitionen und Betriebskosten für Abluftreinigungsanlagen aus wettbewerbstechnischer Sicht und unterschiedlichen Umweltauflagen in der Welt, selten in voller Höhe auf die Produktpreise umgelegt werden können. Daraus ergibt sich die unternehmerische Notwendigkeit, einerseits behördliche und umweltrelevante Auflagen zu erfüllen und andererseits in kosteneffiziente Abluftreinigungsanlagen zu investieren. Eine besondere Bedeutung haben in der Ablufttechnik chemische und biologisch-chemische Wäscher bzw. Biofilter, die durch ihre universelle Einsetzbarkeit und ihre Kosten-Nutzen-Effizienz zunehmend an Bedeutung gewinnen. Zwei wesentliche limitierende Faktoren dieser Anlagen sind die zur Verfügung stehende Reaktions- und Grenzfläche im Verhältnis zum Reaktorraum sowie deren definierte und berechenbare Auslegung auf variierende Gasstör- und Luftschadstoffkomponenten.

Üblicherweise werden die biologisch-chemischen Wäscher bzw. Biofilter mit Granulaten, Flakes, Blähton oder anderen porösen Filtermaterialien bzw. mit natürlichen Faserstoffen wie Rindenmulch, Wurzelholz, Heidekraut oder dergleichen befüllt. Die Filterwirkung natürlicher Faserstoffe ist nur bedingt einstellbar und unterliegt Schwankungen, bei synthetisch hergestellten Filtermaterialien sind oft weitere Vorbehandlungen notwendig, um eine Besiedlung mit Mikroorganismen zu ermöglichen, bzw. ist oft das Wasserrückhaltevermögen begrenzt.
Bisherige Aufwuchs- bzw. Schüttkörper aus PP-Material haben eine kleinere verfügbare Oberfläche und kein bzw. äußerst geringes Wasserrückhaltevermögen.

### [Aufgabe der Erfindung]

Ausgehend von dem oben zitierten Stand der Technik besteht die Aufgabe der vorliegenden Erfindung darin, ein eigenstabiles Filtermaterial der eingangs genannten Gattung zur Verfügung zu stellen, welches ein höheres Porenvolumen und eine höhere Porosität und damit eine höhere Adsorptionsleistung aufweist.

Die Lösung dieser Aufgabe liefert ein eigenstabiles Filtermaterial der eingangs genannten Gattung mit den kennzeichnenden Merkmalen des Anspruchs 1.

Überraschend konnte im Rahmen umfangreicher Versuche festgestellt werden, dass ein Filtermaterial , welches erhältlich ist aus einer Fasermischung, die eine Kombination von nichtschmelzenden und schmelzenden Fasern oder Fasern mit unterschiedlichen Schmelzpunkten umfasst, wobei die schmelzende Komponente der Fasermischung den äußeren Rand des Granulats verfestigt, während im Inneren des Granulats unverfestigte, spiralförmig angeordnete Faserbündel vorliegen, ein höheres Porenvolumen, eine höhere Porosität, eine höhere Adsorptionsleistung und weitere vorteilhafte Eigenschaften für ein Filtermaterial aufweist.

Dabei ist Gegenstand der vorliegenden Erfindung ein Filtermaterial aus einem Fasergranulat aus endlich langen Fasern, bei dem eine Komponente der Fasermischung thermoplastische Fasern sind, die nur am äußeren Rand des Granulats verfestigt sind, während im Inneren des Granulats unverfestigte, spiralförmig angeordnete Faserbündel vorliegen.

Beispielsweise können bei einem erfindungsgemäßen Filtermaterial die unverfestigten spiralförmig angeordneten Faserbündel im Inneren des Granulats Cellulosefasern und/oder Viskosefasern umfassen.

Das erfindungsgemäße Filtermaterial ist beispielsweise erhältlich aus einer Fasermischung von nicht schmelzenden Chemiefasern und/oder Mineralfasern und schmelzenden Fasern oder einer Fasermischung aus schmelzenden Fasern mit unterschiedlichen Schmelzpunkten.

Die erfindungsgemäße Lösung liefert ein kostengünstiges und effektives Filtermaterial, das eine große verfügbare Oberfläche, ein definiertes Wasserrückhaltevermögen, gute Durchströmbarkeit bei geringen Druckverlusten über eine lange Gebrauchsdauer, hohe chemisch-biologische oder physikalische Wirksamkeit und eine ausreichende Nährstoffspeicherkapazität bietet. Es ermöglicht eine definierte und berechenbare Auslegung unter Berücksichtigung variierender Gasstör- und Luftschadstoffkomponenten.

Bei Verwendung eines eigenstabilen Filtermaterials der erfindungsgemäßen Art beispielsweise auf Basis von Cellulose/PP-Langfasergranulaten zum Beispiel als Biofilter gelingt es, sowohl die Bedingungen für biologisches Wachstum, als auch das Reaktorvolumen in Bezug auf Grenzflächengröße zu optimieren. Mit der Nutzung des eigenstabilen Filtermaterials als Trägermaterial in Wäschern und Biofiltern gelingt es, die reaktive Oberfläche im Verhältnis zum Raumvolumen zu vervielfachen und gleichzeitig eine definierte Wasserrückhaltefunktion sowie Nährstoffspeicherung durch die Speicherfähigkeit der Cellulosefasern bei Beibehaltung der Auflastfähigkeit zu sichern. Somit können Prozesse und damit Investitions- und Betriebskosten optimiert werden.

Entscheidend für eine gute Funktion der Biofilter ist die Aktivität der eingebrachten Filtermaterialien. Die Schüttungen sollten ein definiertes Wasserrückhaltevermögen, gute Durchströmbarkeit, hohe chemisch-biologische Wirksamkeit und eine ausreichende Nährstoffspeicherkapazität haben. Die Filterleistung kann durch die Zugabe von sorptiv, biozid oder oxidativ wirksamen Additiven optimiert werden. Dabei ist es vorteilhaft, die Additive homogen im Filtermaterial zu verteilen und so zu fixieren, dass das Material nicht aus dem Filter ausgetragen wird oder sich an bestimmten Stellen des Filters anreichert. Ein weiteres Problem ist der Druckverlust beim Durchströmen des Filters. Das Füllmaterial sollte daher möglichst eine definierte und über die Lebensdauer des Filters konstante Schüttdichte haben, damit der Druckverlust im Filter nicht zu hoch ist.

In das erfindungsgemäße eigenstabile Filtermaterial in Form von Langfasergranulaten, welches beispielsweise hergestellt werden kann nach einem Verfahren gemäß EP 1097033 B1, werden chemisch, physikalisch und/oder biologisch wirksame Additive eingelagert und fixiert. Das eigenstabile Filtermaterial kann insbesondere als physikalisch und/oder chemisch-biologisch wirksame Schüttung in Anlagen zur Abreinigung von Störkomponenten in Biogasen und Schadstoffen in der Abluft genutzt werden.

Erfindungsgemäß dienen als eigenstabiles Filtermaterial bevorzugt Langfasergranulate, hergestellt nach Verfahren gemäß EP 1097033 B1, in die chemisch und/oder biologisch wirksame Additive eingelagert und fixiert werden. Nach diesem Verfahren hergestellte Granulate zeichnen sich dadurch aus, dass sie nur an der Außenwand verfestigt sind und dadurch aber die Eigenstabilität gewähren, im Querschnitt bzw. im Innern aber unverfestigte, spiralförmig angeordnete Faserbündel vorliegen, die eine Kapillarwirkung zeigen. Bei den Fasern ist immer ein Anteil thermoplastischer oder Bindefasern enthalten, es können auch Fasermischungen sein, zum Beispiel bestehend aus unterschiedlichen Gewichtsanteilen Polypropylenfasern und Cellulosefasern. Die erfindungsgemäßen Langfasergranulate bestehen beispielsweise aus einer Fasermischung von Cellulosefasern und PP-Fasern (Polypropylen) oder anderen thermoplastischen Fasern. Das Wasserrückhaltevermögen kann durch Variation des Anteils und der Art der Cellulosefasern in einem weiten Bereich von 10% bis 500 % eingestellt werden. Die Granulatkörper haben bevorzugte Durchmesser von 6 - 10 mm und sind in Längen von 10 - 30 mm geschnitten. Die Granulate können je nach Beladung als Schüttkörper in der Abgasfiltration, Abgasreinigung oder für Adsorptions- und Absorptionszwecke verwendet werden.

Die Herstellung der Fasergranulate und deren Anwendung als Filtermaterial sind jedoch nicht auf das Vorhandensein von Langcellulosefasern beschränkt. Vielmehr sind eine nicht schmelzende Faserkomponente (Cellulosefasern, Synthesefasern, Mineralfasern) und eine schmelzende und damit formgebende Faserkomponente (Polyprolylen oder andere thermoplastische Fasern) erforderlich. Alternativ ist es auch möglich, Faserkomponenten mit unterschiedlichen Schmelzpunkten zu verwenden.

Die Eigenschaften des eigenstabilen Filtermaterials, wie Kapillargröße, Durchsatz, Wasserrückhaltevermögen, Absorption, Adsorption, können durch Variation der Faserzusammensetzung, der Prozessparameter bei der Granulatherstellung und die Schnittlänge in weiten Grenzen eingestellt werden. Durch das große Porenvolumen der Granulate ist es auch möglich, weitere Additive wie z. B. Aktivkohle oder Cyclodextrine zur Geruchs- und Schadstoffadsorption, antimikrobiell wirksame Substanzen wie Zink- und Silberoxid, photokatalytisch aktive Substanzen wie z.B. Titandioxid zur Zersetzung und Entfernung von Luftschadstoffen oder Eisenhydroxid zur Entschwefelung von Biogas durch einfache Tauch- und Mischprozesse ein- oder anzulagern und damit die Filterwirkung einzustellen. Auch bieten die Granulate gute Bedingungen für die Ansiedlung von Mikroorganismen an und innerhalb der Granulate für eine biologische Gasreinigung.

Gemäß einer bevorzugten Weiterbildung der vorliegenden Erfindung weist das erfindungsgemäße Filtermaterial ein Porenvolumen von wenigstens etwa 1200 mm³/g, vorzugsweise von etwa 1200 mm³/g bis etwa 3200 mm³/g auf.

Weiter hat dieses vorzugsweise einen Anteil Poren mit einem Radius kleiner/gleich 10 µm von wenigstens etwa 50 %, vorzugsweise wenigstens etwa 70 %, beispielsweise im Bereich von etwa 75 % bis etwa 90 %. Durch die vorgenannten Maßnahmen wird eine höhere Adsorptionsleistung wird erreicht.

Besonders bevorzugt weist das erfindungsgemäße Filtermaterial eine Porosität von wenigstens etwa 65 %,beispielsweise von bis zu 80 %, und/oder eine Wasseraufnahme von wenigstens etwa 50 %, beispielsweise von bis zu 75 % und/oder ein Wasserrückhaltevermögen von wenigstens etwa 100 % auf, beispielsweise von bis zu 300 %.

Für das Fasergemisch verwendet man beispielsweise ein Gemisch aus Cellulosefasern und einem Polyolefin, insbesondere ist Polypropylen als thermoplastische Faserkomponente gut geeignet.

Das erfindungsgemäße Filtermaterial hat vorzugsweise eine Dichte von weniger als 1,5 g/cm³, bevorzugt von etwa 0,9 g/cm³ bis etwa 1,4 g/cm³ und/oder eine Schüttung aus diesem Filtermaterial weist eine Schüttdichte im Trockenzustand von weniger als 300 g/l, vorzugsweise von etwa 140 g/l bis etwa 230 g/l auf.

Ein wesentlicher Vorteil des erfindungsgemäßen Filtermaterials ergibt sich daraus, dass dieses anders als die aus dem Stand der Technik bekannten Filtermaterialien zeitlich und räumlich getrennt von der Herstellung mit einem Reagenz oder Additiv beladen werden kann, da zunächst das unbeladene Trägermaterial in einem Trockenverfahren hergestellt wird. Vorteilhaft ist auch, dass nach einer Beladung zu einem späteren Zeitpunkt eine Wiederbeladung des erfindungsgemäßen Filtermaterials mit Reagenzien und/oder Additiven möglich ist.

Insbesondere kann das erfindungsgemäße Trägermaterial mit Additiven in Form von Aktivkohle und/oder Cyclodextrinen zur Geruchs- und Schadstoffadsorption, und/oder antimikrobiell wirksamen Substanzen wie insbesondere Zink- und Silberoxid, und/oder photokatalytisch aktiven Substanzen wie insbesondere Titandioxid zur Zersetzung und Entfernung von Luftschadstoffen und/oder Eisenhydroxid zur Entschwefelung von Biogas beladen werden.

Gegenstand der vorliegenden Erfindung ist weiterhin die Verwendung eines eigenstabilen Filtermaterials der vorgenannten Art als chemisch-biologisch wirksame Schüttung in Anlagen zur Abreinigung von Störkomponenten in Biogasen und Schadstoffen in der Abluft.

Zusammenfassend können nachfolgend die Charakteristika des erfindungsgemäßen Filtermaterials und die daraus resultierenden Vorteile noch einmal festgehalten werden. Es wird ausgegangen von einer homogenen Fasermischung aus Stapelfasern, im Gegensatz zu Filamenten, die teils im Stand der Technik verwendet werden. Es ergibt sich eine gute Einbindung der Fasern durch die spiralförmige Anordnung im Granulatkorn sowie die verfestigte äußere Hülle. Dadurch werden keine Fasern bei der Anwendung ausgetragen, wie dies bei Verwendung von kurzen Fasern der Fall ist. Es wird ein staubfreies Produkt erhalten, welches keinen Abrieb hat. Durch die Faserauswahl, die variablen Mischungsverhältnisse und den gewählten Verdichtungsgrad kann ein definiertes Porenvolumen eingestellt werden. Dies ist bei den Pellets gemäß dem eingangs erwähnten Stand der Technik nicht möglich. Die Granulatpartikel haben eine definierte zylinderförmige Geometrie mit einstellbarem Verhältnis Länge:Durchmesser im Gegensatz zu den vorbekannten Filtermaterialien. Wenn hingegen wie im Stand der Technik, bedingt durch das Herstellungsverfahren, Bruchstücke entstehen, haben die Granulatpartikel keine einheitlichen Abmessungen.

Das erfindungsgemäße Filtermaterial ist gut rieselfähig und hat eine hohe Eigenstabilität in einer Schüttung. Dies sind im Hinblick auf den Anwendungszweck als Schüttgut in Filterkolonnen eine wichtige Eigenschaft, die in der erfindungsgemäßen Kern/Mantel-Struktur begründet ist bei gleichzeitig offenen Schnittkanten. Die Granulatherstellung und Beladung können in zeitlich und räumlich getrennten Prozessen erfolgen. Das erfindungsgemäße Fasergranulat kann im Einbauzustand mit neuem frischem Reagenz oder Additiv wiederbeladen werden.

Das erfindungsgemäße Fasergranulat besteht aus endlich langen Fasern mit Faserlängen von beispielsweise zwischen 30 mm und 200 mm, wobei die Fasern spiralförmig angeordnet sind. Erfindungsgemäß wird der gesamte äußere Mantel verschmolzen, während nur der Kern des Granulatpartikels unverfestigt ist und die Enden (Schnittkanten) offen sind. Daraus resultiert eine definierte Zylinderform mit Kern/Mantelgeometrie. Es ist in dem Fasergemisch für das Granulat neben der thermoplastischen immer mindestens eine nicht schmelzende Faserkomponente enthalten.

Es sind keine Hilfsstoffe zum Mischen der fasrigen Komponenten mit dem Additiv notwendig. Das erfindungsgemäße Granulat hat ein höheres Porenvolumen und eine höhere Porosität und somit größere Adsorptionsoberflächen und eine höhere Adsorptionsleistung als vorbekannte Filtermaterialien. Es hat eine geringere Materialdichte und geringere Schüttdichte als vorbekannte Filtermaterialien, wodurch sich eine geringere Auflast ergibt, was sich günstig auf den Druckverlust in der Filterkolonne auswirkt.

Mit der Erfindung ist es somit möglich, bestimmte Aktivitätsgrade voreinzustellen, kleinere Anlagen mit höheren Gas- und Abluftfrachten zu befahren und gleichzeitig Energie und Betriebsmittel (z. B. Wasser, Strom) einzusparen.

Durch die Variation der Verfahrensparameter (Temperatur der Düse und Nachheizung, aufgebrachte Drehung, Abzugsgeschwindigkeit etc.) und die Freiheitsgrade bei der Auswahl der Faserkomponenten und deren Anteile im Granulat können die strukturellen (Kern-Mantel-Struktur, spiralförmige Anordnung der Fasern, zylinderförmige Geometrie)und physikalischen (Dichte, Porosität, Wasseraufnahme, Druckstabilität) Eigenschaften der Fasergranulate eingestellt werden. Bereits durch das Aufbringen einer Drehung werden die Fasern im Faserband als Vorstufe des Granulatstrangs gezielt orientiert und zu einem Strang geformt. Dieses Prinzip ist dem der Garnherstellung entlehnt, wo ebenfalls durch das Aufbringen einer Drehung die Fasern miteinander verdrillt werden und aus endlich langen Fasern ein endloses Garn entsteht. Durch die aufgebrachte Drehung entsteht bereits ein mechanisch vorverdichteter Faserstrang, dessen Struktur und Geometrie durch ein kurzzeitiges Erwärmen und damit Schmelzen der thermoplastischen Fasern im Mantel fixiert wird. Somit verbleibt ein lockerer, rein mechanisch konsolidierter Kern, der eine hohe Porosität und geringe Dichte gewährleistet, umhüllt von einem festen Mantel der eine hohe Form- und Druckstabilität sichert. Bei der Herstellung von Pellets für Filtermaterialien nach dem Stand der Technik geht man jedoch von einer breiigen Masse aus, die mit hohem Druck zum Pellet geformt und bis ins Innere durch Trocknen verfestigt wird. Diese hoch verdichteten Pellets haben deshalb geringere Porositäten, eine höhere Dichte und damit ein höheres Schüttvolumen als die Langfasergranulate. Außerdem enthalten sie hohe Staubund Kurzfaseranteile.

Nachfolgend wird die vorliegende Erfindung anhand von Beispielen näher erläutert:

### Beispiel 1:

Ein Langfasergranulat aus einem Fasergemisch von Viskosefasern (Feinheit 3,3 dtex, Faserlänge 38 mm) und Polypropylenfasern (Feinheit 7 dtex, 60 mm) mit einem Viskosefasergehalt von 40 Gew.-% und einem Polypropylenfasergehalt von 60 Gew.-% wird hergestellt bei 250°C Düsen- und Nachheizungstemperatur und abgelängt auf eine Schnittlänge von 20 mm hat einen Granulatdurchmesser von 7 mm. Das Granulat besitzt ein Porenvolumen von 3200 mm³/g und eine Porosität von 77%. Die Wasseraufnahme des Granulates beträgt 69% und das Wasserrückhaltevermögen 220%. Die Beladungskapazität mit Eisenhydroxid im Tauchverfahren beträgt 4,5 Gew.-% und in der Pulverimprägnierung 22 Gew.-%. Das Fasergranulat kann als Schüttung in Filterkolonnen eingesetzt werden. Es ergibt sich eine Schüttdichte von 170 g/l und eine Porosität der Schüttung von 0,5 für die trockenen Granulate.

### Beispiel 2:

Ein Langfasergranulat aus einem Fasergemisch von Viskosefasern (Feinheit 3,3 dtex, Faserlänge 38 mm) und Polypropylenfasern (Feinheit 7 dtex, 60 mm) mit einem Viskosefasergehalt von 40 Gew.-% und einem Polypropylenfasergehalt von 60 Gew.-% wird hergestellt bei 350°C Düsen- und Nachheizungstemperatur und abgelängt auf eine Schnittlänge von 20 mm hat einen Granulatdurchmesser von 5 mm. Das Granulat besitzt ein Porenvolumen von 1200 mm³/g und eine Porosität von 63%. Die Wasseraufnahme des Granulates beträgt 55% und das Wasserrückhaltevermögen 124%. Die Beladungskapazität mit Eisenhydroxid im Tauchverfahren beträgt 1,6 Gew.-% und in der Pulverimprägnierung 23 Gew.-%. Das Fasergranulat kann als Schüttung in Filterkolonnen eingesetzt werden. Es ergibt sich eine Schüttdichte von 233 g/l und eine Porosität der Schüttung von 0,45 für die trockenen Granulate.

### Beispiel 3:

Ein Langfasergranulat wird hergestellt aus einem Fasergemisch von Polyacrylnitrilfasern (Feinheit 2,2 dtex, 60 mm) und Polypropylenfasern (Feinheit 7 dtex, 60 mm) mit einem Polyacralnitrilgehalt von 80 Gew.-% und einem Polypropylenfasergehalt von 20 Gew.-% bei 210°C Düsen und Nachheizungstemperatur und abgelängt auf eine Schnittlänge von 20 mm hat einem Granulatdurchmesser von 7 mm. Die Wasseraufnahme des Granulates beträgt 64% und das Wasserrückhaltevermögen 178%. Die Beladungskapazität mit Eisenhydroxid im Tauchverfahren beträgt 2,4 Gew.-% und in der Pulverimprägnierung 23 Gew.-%. Das Fasergranulat kann als Schüttung in Filterkolonnen eingesetzt werden. Es ergibt sich eine Schüttdichte von 172 g/l und eine Porosität der Schüttung von 0,59 für die trockenen Granulate.

Nachfolgend wird unter Bezugnehme auf die beiliegenden Zeichnungen beispielhaft der Aufbau der Granulatkörper eines erfindungsgemäßen Filtermaterials näher erläutert. Dabei zeigen:
Figur 1 eine schematisch vereinfachte Seitenansicht eines solchen Granulatkörpers im teilweisen Längsschnitt;
Figur 2 einen schematisch vereinfachten Querschnitt durch einen Granulatkörper gemäß dem Ausführungsbeispiel von Figur 1.

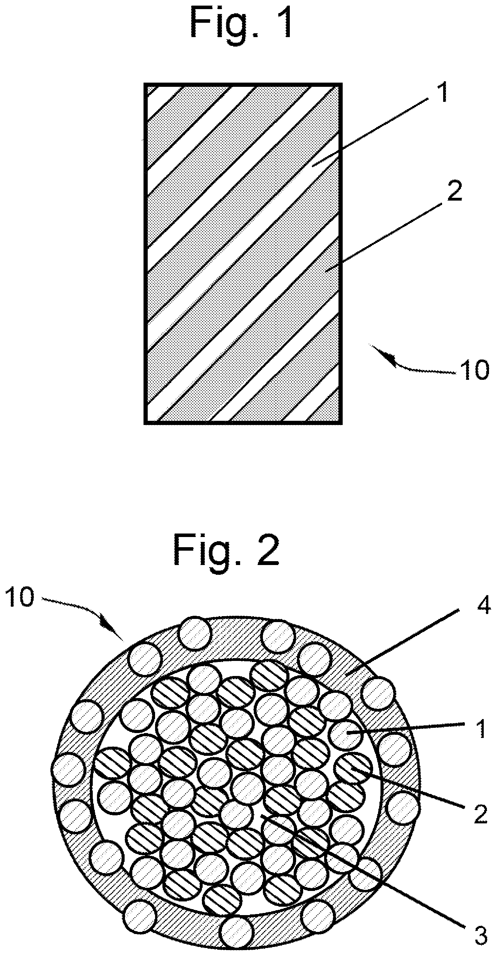

Es wird auf die Figuren 1 und 2 Bezug genommen. Die Ansicht gemäß Figur 1 zeigt, dass die nicht schmelzende Faserkomponente 1 in dem Granulatpartikel 10 in spiralförmig oder schraubenförmig um die Achse des beispielsweise etwa zylindrisch geformten Partikels gewunden angeordnet ist, was auf das spezifische Herstellungsverfahren zurückzuführen ist, wie in der (EP 1097033 B1) beschrieben. Dabei sind die nicht schmelzenden Fasern 1 in einer Mantelzone 4 des Granulatpartikels (siehe Figur 2)in das aufgeschmolzene Material 2 der schmelzenden Faserkomponente eingebettet. In der radial weiter innen liegenden Kernzone 3 liegen die schraubenförmig verdrillten Fasern der schmelzenden 2 und der nicht schmelzenden Faserkomponente 1 in Faserform vor, das heißt hier ist auch die schmelzende Faserkomponente unverschmolzen. Durch die Tatsache, dass die Mantelzone 4 die schmelzende Faserkomponente 2, die zunächst aufgeschmolzen und danach durch Abkühlen wieder verfestigt wurde, in verfestigtem Zustand enthält, wird das Granulatpartikel konsolidiert. Die in der Kernzone vorliegenden verdrillten Fasern beider Typen werden durch die verfestigte Mantelzone 4 umhüllt. Die nicht schmelzenden verdrillten Fasern sind in der Mantelzone quasi in eine Matrix aus dem wieder verfestigten thermoplastischen Material eingebettet.

### Bezugszeichenliste

- 1: nicht schmelzende Faserkomponente
- 2: schmelzende Faserkomponente
- 3: Kern (schmelzende und nicht schmelzende Faserkomponente mit Hohlräumen (Kapillaren)
- 4: Mantel (nicht schmelzende und geschmolzene Faserkomponente)

- 10: Granulatpartikel

## Patentansprüche

1. Eigenstabiles Filtermaterial in Form eines Fasergranulats erhältlich aus einer Fasermischung aus endlich langen Fasern, welche eine Kombination von nichtschmelzenden und schmelzenden Fasern oder Fasern mit unterschiedlichen Schmelzpunkten umfasst, wobei in den Granulatpartikeln die nicht schmelzende Faserkomponente (1) spiralförmig oder schraubenförmig um die Achse des Partikels gewunden angeordnet ist, wobei die Granulatpartikel eine Mantelzone (4) umfassen und eine radial weiter innen liegende Kernzone (3), wobei die schmelzende Komponente der Fasermischung den äußeren Rand des Granulats verfestigt, während im Inneren des Granulats unverfestigte, spiralförmig angeordnete Faserbündel vorliegen, wobei in der Kernzone (3) schraubenförmig verdrillte Fasern der schmelzenden (2) und der nicht schmelzenden Faserkomponente (1) in Faserform vorliegen, **dadurch gekennzeichnet, dass** in den Fasergranulaten chemisch, physikalisch und/oder biologisch wirksame Reagenzien und/oder Additive eingelagert und fixiert sind und dass die nicht schmelzenden Fasern (1) in einer Mantelzone (4) des Granulatpartikels in das aufgeschmolzene Material der schmelzenden Faserkomponente eingebettet sind.

2. Eigenstabiles Filtermaterial nach Anspruch 1, **dadurch gekennzeichnet, dass** dieses aus einer Fasermischung von nicht schmelzenden Chemiefasern und/oder Mineralfasern und schmelzenden Fasern oder einer Fasermischung aus schmelzenden Fasern mit unterschiedlichen Schmelzpunkten hergestellt ist.

3. Eigenstabiles Filtermaterial nach Anspruch 1 oder 2, **dadurch gekennzeichnet, dass** als schmelzende Komponente der Fasermischung thermoplastische Fasern dienen.

4. Eigenstabiles Filtermaterial nach einem der Ansprüche 1 bis 3, **dadurch gekennzeichnet, dass** die unverfestigten spiralförmig angeordneten Faserbündel im Inneren des Granulats Cellulosefasern und/oder Viskosefasern umfassen.

5. Eigenstabiles Filtermaterial nach einem der Ansprüche 1 bis 4, **dadurch gekennzeichnet, dass** dieses ein Porenvolumen von wenigstens etwa 1200 mm³/g, vorzugsweise von etwa 1200 mm³/g bis etwa 3200 mm³/g aufweist.

6. Eigenstabiles Filtermaterial nach einem der Ansprüche 1 bis 5, **dadurch gekennzeichnet, dass** dieses einen Anteil Poren mit einem Radius kleiner/gleich 10 µm von wenigstens etwa 50 %, vorzugsweise wenigstens etwa 70 % aufweist.

7. Eigenstabiles Filtermaterial nach einem der Ansprüche 1 bis 6, **dadurch gekennzeichnet, dass** dieses eine Porosität von wenigstens etwa 65 %, und/oder eine Wasseraufnahme von wenigstens etwa 50 % und/oder ein Wasserrückhaltevermögen von wenigstens etwa 100 % aufweist.

8. Eigenstabiles Filtermaterial nach einem der Ansprüche 1 bis 7, **dadurch gekennzeichnet, dass** dieses aus einer Fasermischung umfassend Cellulosefasern und PP-Fasern hergestellt ist.

9. Schüttung aus einem eigenstabilen Filtermaterial nach einem der Ansprüche 1 und 3 bis 6, **dadurch gekennzeichnet, dass** das Filtermaterial eine Dichte von weniger als 1,5 g/cm³, bevorzugt von etwa 0,9 g/cm³ bis etwa 1,4 g/cm³ aufweist und/oder die Schüttung aus diesem Filtermaterial eine Schüttdichte im Trockenzustand von weniger als 300 g/l, vorzugsweise von etwa 140 g/l bis etwa 230 g/l aufweist.

10. Eigenstabiles Filtermaterial nacheinem der Ansprüche 1 bis 7, **dadurch gekennzeichnet, dass** dieses Fasergranulat mit einem bevorzugten Durchmesser von etwa 6 - etwa 10 mm umfasst und/oder geschnitten in Längen von etwa 10 mm - etwa 30 mm umfasst.

11. Eigenstabiles Filtermaterial nach einem der Ansprüche 2 bis 7, **dadurch gekennzeichnet, dass** das Filtermaterial ein Trägermaterial in Form des Fasergranulats mit den Merkmalen eines der Ansprüche 2 bis 7 aufweist, welches mit Reagenzien und/oder Additiven wiederbeladbar ist.

12. Verfahren zur Herstellung eines eigenstabilen Filtermaterials nach einem der Ansprüche 1 bis 11, **dadurch gekennzeichnet, dass** zunächst das Fasergranulat als unbeladenes rohes Trägermaterial in einem Trockenverfahren hergestellt wird und erst in einem nachfolgenden getrennten Schritt dieses Trägermaterial mit einem oder mehreren Reagenzien und/oder Additiven beladen wird.

13. Verfahren zur Herstellung eines eigenstabilen Filtermaterials nach Anspruch 12, **dadurch gekennzeichnet, dass** das Trägermaterial mit Additiven in Form von Aktivkohle und/oder Cyclodextrinen zur Geruchs- und Schadstoffadsorption, und/oder antimikrobiell wirksamen Substanzen wie insbesondere Zink- und Silberoxid, und/oder photokatalytisch aktiven Substanzen wie insbesondere Titandioxid zur Zersetzung und Entfernung von Luftschadstoffen und/oder Eisenhydroxid zur Entschwefelung von Biogas beladen wird.

14. Verwendung eines eigenstabilen Filtermaterials nach einem der Ansprüche 1 bis 12, **dadurch gekennzeichnet, dass** es als chemisch-biologisch wirksame Schüttung in Anlagen zur Abreinigung von Störkomponenten in Biogasen und Schadstoffen in der Abluft genutzt wird.

## Claims

1. An inherently stable filter material in the form of a fibre granulate obtainable from a fibre mixture of endless fibres comprising a combination of non-fusing and fusing fibres or fibres having different fusing points, the non-fusing component (1) in the granulate particles being wound spirally or helically around the axis of the particle, the granulate particles comprising a mantle zone (4) and a core zone (3) situated radially further inwards, the fusing component of the fibre mixture solidifying the outer edge of the granulate, while non-solidified, spirally arranged fibre bundles are present in the interior of the granulate, helically twisted fibres of the fusing (2) and non-fusing (1) fibre components being present in fibre form in the core zone (3),
**characterised in that**
chemically, physically and/or biologically active reagents and/or additives are incorporated and fixed in the fibre granulates, and the non-fusing fibres (1) are embedded in the fused material of the fusing fibre component in a mantle zone (4) of the granulate particle.

2. The inherently stable filter material according to Claim 1,
**characterised in that**
said filter material is produced from a fibre mixture of non-fusing chemical fibres and/or mineral fibres and fusing fibres or a fibre mixture of fusing fibres with different fusing points.

3. The inherently stable filter material according to Claim 1 or 2,
**characterised in that**
thermoplastic fibres are used as the fusing component of the fibre mixture.

4. The inherently stable filter material according to any one of Claims 1 to 3,
**characterised in that**
the non-solidified spirally arranged fibre bundles in the interior of the granulate comprise cellulose fibres and/or viscose fibres.

5. The inherently stable filter material according to any one of Claims 1 to 4,
**characterised in that**
said filter material has a pore volume of at least approximately 1200 mm³/g, preferably of approximately 1200 mm³/g to approximately 3200 mm³/g.

6. The inherently stable filter material according to any one of Claims 1 to 5,
**characterised in that**
said filter material has a proportion of pores having a radius of less than or equal to 10 µm of at least approximately 50%, preferably at least approximately 70%.

7. The inherently stable filter material according to any one of Claims 1 to 6,
**characterised in that**
said filter material has a porosity of at least approximately 65% and/or a water absorption of at least approximately 50% and/or a water retaining capacity of at least approximately 100%.

8. The inherently stable filter material according to any one of Claims 1 to 7,
**characterised in that**
said filter material is produced from a fibre mixture comprising cellulose fibres and PP fibres.

9. Packing consisting of an inherently stable filter material according to any one of Claims 1 and 3 to 6,
**characterised in that**
the filter material has a density of less than 1.5 g/cm³, preferably of approximately 0.9 g/cm³ to approximately 1.4 g/cm³, and/or the packing consisting of said filter material has a bulk density in the dry state of less than 300 g/l, preferably of approximately 140 g/l to approximately 230 g/l.

10. The inherently stable filter material according to any one of Claims 1 to 7,
**characterised in that**
said filter material comprises fibre granulate having a preferred diameter of approximately 6 to approximately 10 mm and/or cut into lengths of approximately 10 mm to approximately 30 mm.

11. The inherently stable filter material according to any one of Claims 2 to 7,
**characterised in that**
the filter material contains a carrier material in the form of the fibre granulate having the features of any one of Claims 2 to 7, which can be recharged with reagents and/or additives.

12. A method for the production of an inherently stable filter material according to any one of Claims 1 to 11,
**characterised in that**
first, the fibre granulate is produced as an uncharged raw carrier material in a dry method, and then said carrier material is charged with one or more reagents and/or additives in a subsequent, separate step.

13. The method for producing an inherently stable filter material according to Claim 12,
**characterised in that**
the carrier material is charged with additives in the form of activated carbon and/or cyclodextrins to absorb odours and pollutants, and/or with anti-microbially active substances such as in particular zinc oxide and silver oxide, and/or with photocatalytically active substances such as in particular titanium dioxide to decompose and remove air pollutants, and/or with iron hydroxide to desulphurise biogas.

14. The use of an inherently stable filter material according to any one of Claims 1 to 12,
**characterised in that**
said filter material is used as chemically and biologically active packing in plants for removing disruptive components from biogases and pollutants from exhaust air.

## Revendications

1. Matière filtrante autostable, susceptible d'être obtenue à partir de granulés de fibres composés d'un mélange de fibres finies longues, lequel comprend une association de fibres non fusibles et fusibles ou de fibres présentant différents points de fusion, dans les particules de granulés, la composante fibreuse non fusible (1) étant placée en étant enroulée en forme de spirale ou de forme hélicoïdale autour de l'axe de la particule, les particules de granulé comprenant une zone d'enveloppe (4) et une zone d'âme (3), située plus à l'intérieur en direction radiale, le composant fusible du mélange de fibres solidifiant le bord extérieur des granulés, alors qu'à l'intérieur des granulés étant présents des faisceaux de fibres non solidifiés, placés en forme de spirale, dans la zone d'âme (3) étant présentes sous forme de fibres des fibres torsadées en forme hélicoïdale de la composante fibreuse fusible (2) et de la composante fibreuse non fusible (1), **caractérisée en ce que en ce que** dans les granulés de fibres sont logés et fixés des agents réactifs et/ou des additifs à action chimique, physique et/ou biologique et **en ce que** les fibres non fusibles (1) sont incorporées dans une zone d'enveloppe (4) de la particule de granulé dans la matière fondue de la composante fibreuse fusible.

2. Matière filtrante autostable selon la revendication 1, **caractérisée en ce qu'**elle est fabriquée à partir d'un mélange de fibres composé de fibres chimiques non fusibles et/ou de fibres minérales et de fibres fusibles ou d'un mélange de fibres composé de fibres fusibles présentant différents points de fusion.

3. Matière filtrante autostable selon la revendication 1 ou 2, **caractérisée en ce que** des fibres thermoplastiques font office de composante fusible.

4. Matière filtrante autostable selon l'une quelconque des revendications 1 à 3, **caractérisée en ce que** les faisceaux de fibres non solidifiés, placés en forme de spirale comprennent à l'intérieur des granulés des fibres de cellulose et/ou des fibres de viscose.

5. Matière filtrante autostable selon l'une quelconque des revendications 1 à 4, **caractérisée en ce qu'**il présente un volume poreux d'au moins environ 1200 mm³/g, de préférence d'environ 1200 mm³/g à environ 3200 mm³/g.

6. Matière filtrante autostable selon l'une quelconque des revendications 1 à 5, **caractérisée en ce qu'**elle comporte une part d'au moins 50 %, de préférence d'au moins environ 70 % de pores d'un rayon inférieur /égal à 10 µm.

7. Matière filtrante autostable selon l'une quelconque des revendications 1 à 6, **caractérisée en ce que** qu'elle fait preuve d'une porosité d'au moins environ 65 %, et/ou d'une absorption d'eau d'au moins environ 50 % et/ou d'un pouvoir de rétention d'eau d'au moins environ 100 %.

8. Matière filtrante autostable selon l'une quelconque des revendications 1 à 7, **caractérisée en ce qu'**elle est fabriquée en un mélange de fibres comprenant des fibres de cellulose et des fibres PP.

9. Matière en vrac composée d'une matière filtrante autostable selon l'une quelconque des revendications 1 et 3 à 6, **caractérisée en ce que** la matière filtrante présente une densité inférieure à 1,5 g/cm³, de préférence d'environ 0,9 g/cm³ à environ 1,4 g/cm³ et/ou **en ce que** la matière en vrac composée de ladite matière filtrante présente une densité apparente à l'état sec inférieure à 300 g/l, de préférence d'environ 140 g/l à environ 230 g/l.

10. Matière filtrante autostable selon l'une quelconque des revendications 1 à 7, **caractérisée en ce qu'**elle comprend des granulés de fibres d'un diamètre préférentiel d'environ 6 à environ 10 mm et/ou coupés à des longueurs d'environ 10 mm à environ 30 mm.

11. Matière filtrante autostable selon l'une quelconque des revendications 2 à 7, **caractérisée en ce que** la matière filtrante comporte un matériau de support sous la forme de granulés de fibres pourvus des caractéristiques selon l'une quelconque des revendications 2 à 7, lequel est rechargeable avec des agents réactifs et/ou des additifs.

12. Procédé, destiné à fabriquer une matière filtrante autostable selon l'une quelconque des revendications 1 à 11, **caractérisé en ce qu'**on fabrique d'abord les granulés de fibres sous la forme d'un matériau de support brut, non chargé, par procédé à sec et ce n'est que lors d'une étape suivante séparée qu'on charge ledit matériau de support avec un ou plusieurs agents réactifs et/ou additifs.

13. Procédé, destiné à fabriquer une matière filtrante autostable selon la revendication 12, **caractérisé en ce qu'**on charge le matériau de support avec des additifs sous la forme de charbon actif et/ou de cyclodextrines, pour l'absorption d'odeurs et/ou du substances polluantes et/ou de substances à action microbienne, comme notamment de l'oxyde de zinc et de l'oxyde d'argent et/ou de substances à action photo-catalytique, notamment du dioxyde de titane, pour décomposer et éliminer des polluants atmosphériques et/ou de l'hydroxyde de fer pour désulfurer du biogaz.

14. Utilisation d'une matière filtrante autostable selon l'une quelconque des revendications 1 à 12, **caractérisée en ce qu'**on l'utilise sous la forme d'une matière en vrac à action chimico-biologique dans des installations destinées à débarrasser de leurs composants perturbants des biogaz et des substances polluantes dans de l'air évacué.
